# EUROPÄISCHE PATENTSCHRIFT

(11) **EP 0 358 796 B1**
(45) Veröffentlichungstag und Bekanntmachung des Hinweises auf die Patenterteilung: **28.04.1993**
(21) Anmeldenummer: 88115026.2
(22) Anmeldetag: 14.09.1988
(51) Int. Cl.: H04N 1/18, H04N 1/028

(54) **Röntgendiagnostikeinrichtung mit einem Speicherleucht- schirm**
Diagnostic X-ray device with luminescent storage screen
Dispositif de diagnostic à rayons X avec un écran luminescent à mémoire

(43) Veröffentlichungstag der Anmeldung: 21.03.1990
(73) Patentinhaber: SIEMENS AKTIENGESELLSCHAFT, 80333 München (DE)
(72) Erfinder: Reinfelder, Hans-Erich, Dr., D-8520 Erlangen (DE)

(56) Entgegenhaltungen:
- EP-A- 0 142 865
- EP-A- 0 191 322
- EP-A- 0 205 087
- DE-A- 2 517 346
- DE-A- 3 035 550
- PATENT ABSTRACTS OF JAPAN, Band 5, Nr. 198 (E-87)[870], 16. Dezember 1981; & JP-A-56 120 259 (RICOH K.K.) 21.09.1981

## Beschreibung

Die Erfindung betrifft eine Röntgendiagnostikeinrichtung mit einem Speicherleuchtschirm für die latente Speicherung des jeweiligen Röntgenstrahlenbildes, mit einer Auslesevorrichtung, bei der zur Bildwiedergabe der Speicherleuchtschirm durch eine zeilenförmige Abtastung mittels einer aus nebeneinander angeordneten Leuchtdioden bestehenden Strahlenquelle zum Leuchten angeregt wird, wobei eine Steuerschaltung mit den Leuchtdioden, die einzeln mit den ihnen zugeordneten Bildpunkten auf dem Speicherleuchtschirm gekoppelt sind, verbunden ist, ferner mit einer Detektorvorrichtung zum Erfassen des von dem Speicherleuchtschirm emittierten Lichtes, einer an die Detektorvorrichtung angeschlossenen Rechenschaltung, die aus den mehreren Bildpunkten entsprechenden Signalen Helligkeitswerte für jeden Bildpunkt ermittelt, sowie mit einem Bildwiedergabesystem. Derartige Auslesevorrichtungen dienen zum Anregen des im Speicherleuchtschirm enthaltenen Speicherleuchtstoffes, der Licht emittiert, dessen Helligkeit von der vorhergehenden Belichtung durch Röntgenstrahlen abhängt.

Es ist allgemein bekannt, daß zur Bilderzeugung die Speicherleuchtschirme durch einen Laserstrahl zeilenförmig abgetastet und somit die gespeicherten Bildinformationen ausgelesen werden. Die Ablenkung des Laserstrahls geschieht dabei durch Schwingspiegel oder rotierende Polygon-Systeme. Bei der Auslesung wird ein einziger Bildpunkt durch einen intensiven, fokussierten Laserstrahl zu jedem Zeitpunkt beleuchtet und das durch diese Stimulation emittierte Licht von einem nicht ortsauflösenden Detektorsystem empfangen. Pro Meßzeile werden in der Zeit T eine Anzahl von n Bildpunkten aufgelöst, so daß pro Bildelement bei einer gegebenen Laserleistung P nur ein kleiner Energiebeitrag von maximal E = PxT/n benutzt wird. Die bei der Photostimulation ausgelösten Lichtquanten sind dabei von diesem Energiebetrag E abhängig. Bei den heute üblichen Barium-Fluor-Halogenid-Leuchtstoffen liegt dieser Wert zwischen 100 bis 200 nWs. Bei einer vorgegebenen Abtastzeit von einigen us pro Bildpunkt sind dafür Lichtleistungen von etwa 10 mW notwendig. Zusammen mit der notwendigen Ablenkung des Laserstrahls sind solche Lichtleistungen auf praktikable Art nur durch Laser erreichbar.

Eine Auslesevorrichtung der eingangs genannten Art ist in der EP-A-0 144 963 beschrieben, bei der vier Leuchtdioden nebeneinander angeordnet sind, die einzeln nacheinander eingeschaltet werden. Ihre Abtaststrahlen werden durch einen Spiegel derart abgelenkt, daß jede Leuchtdiode einen bestimmten Bereich einer Abtastzeile auf dem Speicherleuchtschirm überstreicht. Durch die alternierende Einschaltung der Leuchtdioden wird jeweils ein Bildpunkt einer Abtastzeile angeregt und emittiert Licht. Dieses Licht wird von einem Lichtleiter auf einen Detektor geleitet, der entsprechend der Helligkeit des emittierten Lichtes der Bildpunkte ein Signal erzeugt, das als Bildinformation zu einem Röntgenbild zusammengesetzt wird. Auch hierbei zeigt sich die aufwendige Mechanik zur Ablenkung der Abtaststrahlen als nachteilig. Weiterhin wird jeder Bildpunkt durch die Leuchtdioden nur einmal angeregt, so daß man pro Bildpunkt nur eine geringe Lichtausbeute erhält.

Aus der EP-A-0 191 322 ist die Abtastung einer Speicherleuchtstoffolie durch eine Zeile von einzelnen Strahlungsquellen bekannt. Diese werden einzeln derart angesteuert, daß jeweils nicht nebeneinander liegende Bildpunkte zum Leuchten angeregt werden. Durch einen entsprechenden Lichtleiter wird das von den einzelnen Bildpunkten emittierte Licht verschachtelt zu verschiedenen Detektoren weitergeleitet, so daß aufeinanderfolgend angeregten Bildpunkten jeweils ein anderer Detektor zugeordnet ist. Da hier die Leuchtdioden einzeln angesteuert werden, tritt auch hier bei vorgegebener Abtastzeit das Problem der Leistung des emittierten Lichtes auf.

Die Erfindung geht von der Aufgabe aus, eine Röntgendiagnostikeinrichtung der eingangs genannten Art zu schaffen, bei der die Abtastung des Speicherleuchtschirmes durch die Auslesevorrichtung ohne mechanische Ablenkung des Abtaststrahles und bei vorgebener Abtastzeit eine optimale Ausnutzung der gespeicherten Energie erfolgt.

Die Aufgabe wird erfindungsgemäß dadurch gelöst, daß die Steuerschaltung die Leuchtdioden für jeden Bildpunkt mehrfach derart ansteuert, daß nacheinander mehrere Leuchtdioden in unterschiedlichen Kombinationen gleichzeitig eingeschaltet sind, so daß entsprechend mehrere Bildpunkte auf dem Speicherleuchtschirm gleichzeitig angeregt werden und Licht emittieren, und daß die Ansteuerung der Leuchtdioden anhand einer Transformation codiert erfolgt, so daß bei der Auslesung der Bildpunkte Transformationskoeffizienten erhalten werden, und daß die Rechenschaltung aus diesen Transformationskoeffizienten durch Rücktransformation die Helligkeitswerte für jeden Bildpunkt einer Zeile zurückgewinnt. Durch diese Ansteuerung der Leuchtdioden können mehrere Bildpunkte gleichzeitig angeregt werden, ohne daß eine aufwendige Mechanik die von den Leuchtdioden ausgehenden Abtaststrahlen ablenkt, so daß man eine schnelle Auslesung bei gleichzeitig hohem Signalpegel erhält. Durch die nachgeschaltete Rechenschaltung wird die Ortsinformation der einzelnen Bildpunkte wiederhergestellt.

Es hat sich als vorteilhaft erwiesen, wenn die Ansteuerung der Leuchtdioden anhand einer Hadamard-Walsh-Transformation erfolgt. Einen einfachen Aufbau erhält man, wenn die Leuchtdioden direkt mit dem Speicherleuchtschirm gekoppelt sind. Eine bessere Anpassung der Fläche der Leuchtdioden an die abzutastende Fläche der Zeile auf dem Speicherleuchtschirm läßt sich erreichen, wenn die Leuchtdioden durch eine Fiberoptik mit dem Speicherleuchtschirm gekoppelt sind.

Die Erfindung ist nachfolgend anhand eines in der Zeichnung dargestellten Ausführungsbeispieles näher erläutert. Es zeigen:
FIG 1 den Aufnahmeteil einer bekannten Röntgendiagnostikeinrichtung,
FIG 2 den Bild-Wiedergabeteil einer erfindungsgemäßen Röntgendiagnostikeinrichtung mit Speicherleuchtschirm und
FIG 3 eine Tabelle zur Erläuterung der Ansteuerung der Leuchtdioden nach einer Transformation.

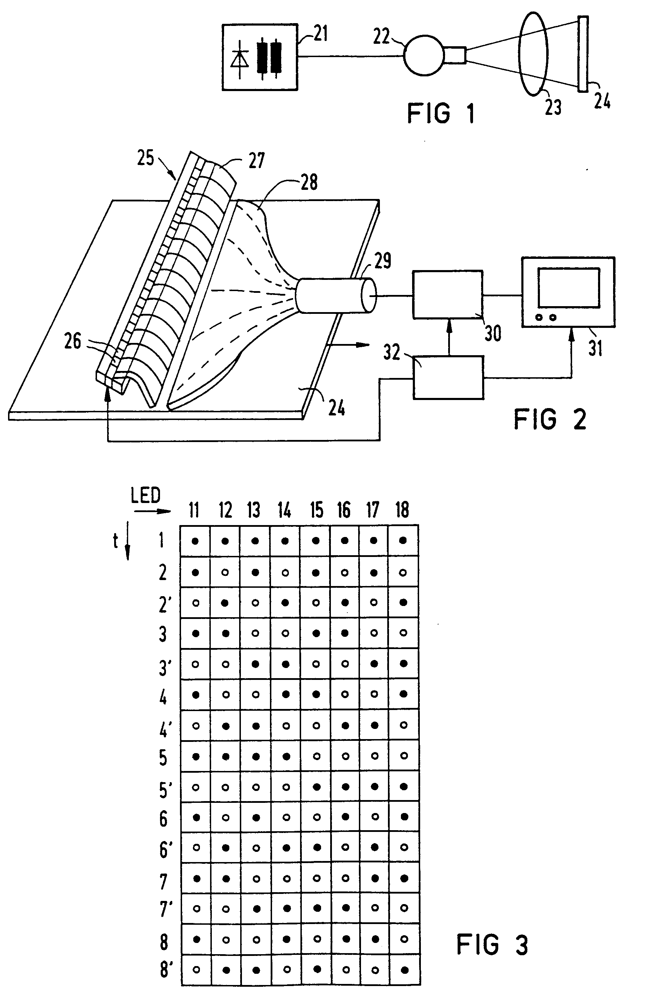

In der FIG 1 ist ein Hochspannungsgenerator 21 dargestellt, der eine Röntgenröhre 22 speist, die Röntgenstrahlen aussendet, die einen Patienten 23 durchdringen. Die durch den Patienten 23 entsprechend seiner Transparenz geschwächten Röntgenstrahlen fallen auf einen Lumineszenz-Speicherleuchtschirm 24. Dieses auffallende Strahlenbild erzeugt in dem Speicherleuchtschirm 24 Elektronen, die in Potentialfallen (Traps) gespeichert werden, so daß nach der Bestrahlung durch die Röntgenstrahlen in dem Speicherleuchtschirm 24 ein latentes Bild gespeichert ist.

In der FIG 2 ist eine Auslesevorrichtung für diesen Speicherleuchtschirm 24 dargestellt, in der dieser Speicherleuchtschirm 24 von einer zusätzlichen Strahlenquelle 25 abgetastet wird. Dadurch werden die in den Traps gespeicherten Elektronen angeregt und können in niedrigere Energieniveaus zurückfallen, wobei die Energiedifferenz in Form von Lichtquanten abgestrahlt wird. Dadurch ist es möglich, das gespeicherte Röntgenstrahlenbild aus dem Speicherleuchtschirm 24 auszulesen.

Die Strahlenquelle 25 besteht dabei aus mehreren, zeilenförmig nebeneinander angeordneten Leuchtdioden 26, die über eine Fiberoptik 27 einzeln mit den ihnen zugeordneten Bildpunkten einer abzutastenden Zeile des Speicherleuchtschirmes 24 gekoppelt sind. Das von dieser Abtastzeile emittierte Licht wird durch einen Lichtleiter 28 erfaßt und auf einen Detektor 29 geleitet. Dieser wandelt die Helligkeit der abgetasteten Bildpunkte in ein elektrisches Signal um, das einer Wiedergabeschaltung 30 zugeführt wird, die aus den analogen Ausgangssignalen des Detektors 29 ein Videosignal zur Darstellung auf einem Monitor 31 erzeugt. Eine Steuereinrichtung 32 bewirkt bei der Wiedergabe die Synchronisation und Ansteuerung der Leuchtdioden 26 der Strahlenquelle 25, der Wiedergabeschaltung 30 und des Monitors 31. Die Wiedergabeschaltung 30 kann in bekannter Weise Bildspeicher, Verarbeitungsschaltungen und Wandler enthalten. Sie weist weiterhin einen Rechner auf, in dem, wie nachfolgend noch beschrieben, die vom Detektor 29 erfaßten Signale in den Bildpunkten zugeordneten Helligkeitswerte umgewandelt werden.

Als zeilenförmig angeordnete Leuchtdioden 16 lassen sich beispielsweise Leuchtdiodenzeilen verwenden, bei denen auf einem integrierten Halbleiterchip bis zu 4.000 Leuchtdioden angeordnet sind. Durch derartige Leuchtdiodenzeilen kann die gesamte Abtastzeile ohne mechanische Bewegung bildpunktweise abgetastet werden. Dabei tritt aber das Problem auf, daß die erzeugte Leuchtdichte einer integrierten Leuchtdiode um Größenordnungen kleiner ist als bei einem entsprechenden Laser. Dieses Problem kann dadurch umgangen werden, daß die einzelnen Leuchtdioden 26 der Leuchtdiodenzeile nicht nacheinander sondern vielmehr derart angesteuert werden, daß beispielsweise wenigstens die Hälfte der Leuchtdioden 26 leuchtet und bei jeder Abtastzeile mehrere Messungen mit unterschiedlicher Konfiguration der eingeschalteten Leuchtdioden 26 erfolgen. Das Ausleseprinzip ermöglicht dabei die parallele Auslesung einer gesamten Bildzeile. Dabei wird nicht die Information eines einzelnen Bildpunktes ausgelesen, sondern Transformationskoeffizienten gemessen, aus denen erst durch eine nachgeschaltete Datenverarbeitung, den oben genannten Rechner, die tatsächliche Bildpunktinformation für jede Zeile gewonnen werden kann. Das Verfahren ist im Prinzip ähnlich der Fourier-Transformation. Im Gegensatz dazu sind hier jedoch binäre bzw. ternäre Transformationen, wie beispielsweise Hadamard-Walsh-Transformation oder die Haar-Transformation, geeignet.

In der FIG 3 ist am Beispiel der Hadamard-Walsh-Transformation die Auslesesequenz für acht Leuchtdioden 11 bis 18 beschrieben, die entsprechend einer Hadamard-Walsh-Transformation angesteuert werden. Im ersten Meßschritt 1 werden dabei alle acht Leuchtdioden 11 bis 18 eingeschaltet. Der Detektor 29 erfaßt die Summeninformation der gesamten Abtastzeile, die in einem in der Wiedergabeschaltung 20 enthaltenen Speicher eingelesen wird. Im zweiten Meßschritt zum Zeitpunkt t = 2 wird der Speicherleuchtschirm 24 durch jede zweite Leuchtdiode 16 angeregt. Dieses ist in der FIG 3 der zweiten Zeile zu entnehmen, wobei die Leuchtdioden 11, 13, 15 und 17 leuchten. Hierbei kennzeichnet ein I!I, daß die entsprechende Leuchtdiode brennt, während ein o eine abgeschaltete Leuchtdiode kennzeichnet.

Bei den weiteren Meßschritten wird entsprechend den Zeitpunkten t = 3 bis t = 8 die Leuchtdioden 11 bis 18 angesteuert. Bei jedem Meßschritt wird das vom Speicherleuchtschirm 24 emittierte Licht vom Detektor 29 erfaßt und in ein digitales Signal umgewandelt und in der Wiedergabeschaltung 30 gespeichert. Aus den derart erhaltenen Meßwerten, die Transformationskoeffizienten entsprechen, kann durch eine entsprechende Rücktransformation die Lichtverteilung in der gesamten Zeile bildpunktweise rekonstruiert werden.

Da bei Speicherleuchtstoffen ein Teil der Information beim Auslesen gelöscht wird, müssen jedoch vor der Rekonstruktion die Meßwerte entsprechend der Auslesetiefe korrigiert werden. Eine einfache Korrektur erhält man, wenn man neben den Meßschritten 1 bis 8 noch die Meßschritte 2' bis 8' einfügt. Diese Meßschritte sind invers zu den entsprechenden anderen Meßschritten, so daß die Leuchtdioden, die bei den Meßschritten 2 bis 8 gebrannt haben, bei den Meßschritten 2' bis 8' ausgeschaltet sind, während die nicht leuchtenden Leuchtdioden der Meßschritte 2 bis 8 bei den Meßschritten 2' bis 8' angesteuert werden. Die Summe der entsprechenden Meßschritte 2 und 2' bzw. 3 und 3' usw. muß dabei so korrigiert werden, daß sich ein konstanter Wert entsprechend dem Meßschritt 1 ergibt. Außerdem wird auf diese Weise die Meßgenauigkeit etwa um den Faktor 12 erhöht.

Der Vorteil dieses Ausleseverfahrens besteht in der stark reduzierten Mechanik, da nur ein mechanischer Vorschub des Speicherleuchtschirmes 24 nötig ist. Weiterhin wird zum Auslesen kein Laser benötigt. Da weiterhin bei dem beschriebenen Ausleseverfahren immer die Hälfte der Leuchtdioden 16 brennt, kann selbst bei sehr kleiner Lichtleistung der Einzeldioden in der Summe ein großes Lichtsignal erzeugt werden. Die pro Bildpunkt aufzuwendende Energie berechnet sich bei diesem Meßverfahren als T/2 mal der Leistung der Einzeldioden. Betrachtet man eine Leuchtdiodenzeile bestehend aus 2.000 Einzeldioden, so wird die Anforderung an die erforderliche Lichtleistung einer Einzeldiode damit um den Faktor 1.000 reduziert. Betrachtet man weiterhin nur die Meßschritte 1 bis 8, so ergibt sich, daß die gesamte Meßzeit nicht länger als bei der bisher sequenziellen, bildpunktweisen Auslesung ist.

## Patentansprüche

1. Röntgendiagnostikeinrichtung mit einem Speicherleuchtschirm (24) für die latente Speicherung des jeweiligen Röntgenstrahlenbildes, mit einer Auslesevorrichtung (25 bis 32), bei der zur Bildwiedergabe der Speicherleuchtschirm (24) durch eine zeilenförmige Abtastung mittels einer aus nebeneinander angeordneten Leuchtdioden (26) bestehenden Strahlenquelle (25) zum Leuchten angeregt wird, wobei eine Steuerschaltung (32) mit den Leuchtdioden (26), die einzeln mit den ihnen zugeordneten Bildpunkten auf dem Speicherleuchtschirm (24) gekoppelt sind, verbunden ist, ferner mit einer Detektorvorrichtung (28, 29) zum Erfassen des von dem Speicherleuchtschirm (24) emittierten Lichtes, einer an die Detektorvorrichtung (28, 29) angeschlossenen Rechenschaltung (30), die aus den mehreren Bildpunkten entsprechenden Signalen Helligkeitswerte für jeden Bildpunkt ermittelt, sowie mit einem Bildwiedergabesystem (31), dadurch gekennzeichnet, daß die Steuerschaltung (32) die Leuchtdioden (26) für jeden Bildpunkt mehrfach derart ansteuert, daß nacheinander mehrere Leuchtdioden (26) in unterschiedlichen Kombinationen gleichzeitig eingeschaltet sind, so daß entsprechend mehrere Bildpunkte auf dem Speicherleuchtschirm (24) gleichzeitig angeregt werden und Licht emittieren, und daß die Ansteuerung der Leuchtdioden (26) anhand einer Transformation codiert erfolgt, so daß bei der Auslesung der Bildpunkte Transformationskoeffizienten erhalten werden, und daß die Rechenschaltung (30) aus diesen Transformationskoeffizienten durch Rücktransformation die Helligkeitswerte für jeden Bildpunkt einer Zeile zurückgewinnt.

2. Röntgendiagnostikeinrichtung nach Anspruch 1, dadurch gekennzeichnet, daß als Transformation die Hadamard-Walsh-Transformation verwendet wird.

3. Röntgendiagnostikeinrichtung nach Anspruch 1 oder 2, dadurch gekennzeichnet, daß die Leuchtdioden (26) direkt mit dem Speicherleuchtschirm (24) gekoppelt sind.

4. Röntgendiagnostikeinrichtung nach Anspruch 1 oder 2, dadurch gekennzeichnet, daß die Leuchtdioden (26) durch eine Fiberoptik (27) mit dem Speicherleuchtschirm (24) gekoppelt sind.

## Claims

1. X-ray diagnostic device having a luminescent storage screen (24) for the latent storage of the respective X-ray image, having a read-out arrangement (25 to 32), in which for the purpose of reproducing the image of the luminescent storage screen (24) luminescence is stimulated by linear scanning by means of a radiation source (25) consisting of light-emitting diodes (26) arranged side by side, in which a control circuit arrangement (32) is connected with the light-emitting diodes (26) which are individually coupled with the pixels associated with them on the luminescent storage screen (24), having, furthermore, a detector arrangement (28, 29) for the detection of the light emitted from the luminescent storage screen (24), an arithmetic circuit arrangement (30) which is connected to the detector arrangement (28, 29) and determines brightness values for each pixel from the signals corresponding to several pixels, and also having an image-reproducing system (31), characterised in that the control circuit arrangement (32) activates the light-emitting diodes (26) for each pixel several times in such a way that successively several light-emitting diodes (26) are switched on simultaneously in different combinations so that accordingly several pixels are simultaneously stimulated on the luminescent storage screen (24) and emit light and in that the activation of the light-emitting diodes (26) is effected in a coded manner with the aid of a transformation so that when the pixels are read out transformation coefficients are obtained and in that the arithmetic circuit arrangement (30) recovers the brightness values for each pixel of a line from these transformation coefficients by means of inverse transformation.

2. X-ray diagnostic device according to claim 1, characterised in that the Hadamard-Walsh transformation is used as a transformation.

3. X-ray diagnostic device according to claim 1 or 2, characterised in that the light-emitting diodes (26) are coupled directly with the luminescent storage screen (24).

4. X-ray diagnostic device according to claim 1 or 2, characterised in that the light-emitting diodes (26) are coupled with the luminescent storage screen (24) by means of fibre optics (27).

## Revendications

1. Appareil de radiodiagnostic comportant un écran luminescent de mémorisation (24) pour la mémorisation latente de l'image radiographique respective, un dispositif de lecture (25 à 32), dans lequel, pour la reproduction de l'image, l'écran luminescent de mémorisation (24) est excité de manière à être éclairé, au moyen d'un balayage ligne par ligne, à l'aide d'une source de rayonnement (25) constituée par des diodes à luminescence (26) disposées côte-à-côte, et dans lequel un circuit de commande (32) est raccordé aux diodes à luminescence (26), qui sont couplées individuellement aux points d'image, qui leur sont associés, sur l'écran luminescent de mémorisation (24), et comportant en outre un dispositif de détection (28,29) servant à détecter la lumière émise par l'écran luminescent de mémorisation (24), un circuit de calcul (30) raccordé au dispositif de détection (28,29) et qui détermine, à partir des signaux correspondants à plusieurs points d'image, des valeurs de luminosité pour chaque point d'image, ainsi qu'un système de reproduction d'images (31), caractérisé par le fait que le circuit de commande (32) commande plusieurs fois les diodes à luminescence (26) pour chaque point d'image, de telle sorte que successivement plusieurs diodes à luminescence (26) sont branchées simultanément selon des combinaisons différentes, en sorte que, de façon correspondante, plusieurs points d'image sur l'écran luminescent de mémorisation (24) sont excités simultanément et émettent simultanément une lumière, et que la commande des diodes à luminescence (26) s'effectue d'une manière codée sur la base d'une transformation de telle sorte que, lors de la lecture des points d'image, on obtient des coefficients de transformation, et que le circuit de calcul (30) récupère, à partir de ces coefficients de transformation, au moyen d'une transformation inverse, les valeurs de luminosité pour chaque point d'image d'une ligne.

Appareil de radiodiagnostic suivant la revendication 1, caractérisé par le fait qu'on utilise, comme transformation, la transformation de Hadamar-Walsh.

Appareil de radiodiagnostic suivant la revendication 1 ou 2, caractérisé par le fait que les diodes à luminescence (26) sont couplées directement à l'écran luminescent de mémorisation (24).

Appareil de radiodiagnostic suivant la revendication 1 ou 2, caractérisé par le fait que les diodes à luminescence (26) sont couplées par un système optique à fibres (27) à l'écran luminescent de mémorisation (24).
